# EUROPEAN PATENT SPECIFICATION

(11) **EP 2 007 101 B1**
(45) Date of publication and mention of the grant of the patent: **12.06.2013**
(21) Application number: 07290762.9
(22) Date of filing: 20.06.2007
(51) Int. Cl.: H04L 29/06

(54) **A system with session transfer capability and related method**
System mit Sitzungsübertragungsfunktion und entsprechendes Verfahren
Système avec capacité de transfert de session et procédé associé

(43) Date of publication of application: 24.12.2008
(73) Proprietor: Alcatel Lucent, 75007 Paris (FR)
(72) Inventor: van Broeck, Sigurd, 2980 Zoersel (BE); Lou, Zhe, 2640 Mortsel (BE); Brackx, Michael Frederik François Albert, 3300 Goetsenhoven (BE); Trappeniers, Lieven Leopold Albertine, 2200 Herentals (BE); Godon, Marc Bruno Frieda, 1840 Londerzeel (BE); Criel, Johan Georges Prosper, 9000 Gent (BE); Lauwers, Thais, 2260 Westerlo (BE)
(74) Representative: ALU Antw Patent Attorneys

(56) References cited:
- US-A1- 2004 235 504
- US-A1- 2006 153 198
- US-A1- 2006 291 412

## Description

### Field of the Invention

The present invention generally relates to redirection of sessions and more in particular to redirecting a session from one terminal to another terminal.

### Background of the Invention

Due to services like telephony, streaming audio, streaming video, file transfers, etc. there is a large number of sessions active at any given time. Such sessions are generally between two parties and in particular between two users. Each of these users has a terminal which is used to establish a session and to interact with the session. For instance, a telephone can be used to make a call to another user for speaking and listening to that user. Sessions are also often found in situations where one party is a user or user equipment and the other party is a server or service, for instance a television set can be connected to an Internet Protocol Television (IPTV) network and may be used to display streaming video.

Generally, these sessions are based on different services, applications or access networks. For instance, a mobile telephone call runs over a wireless 900MHz, 1800MHz or 1900MHz band, whereas a fixed telephone call is transported over copper wire in the 0-30 kHz band. Through intermediary gateways, it is possible to establish a session from a mobile user to a fixed user or vice versa. Similarly, an access network such as an xDSL network can provide access to the internet, IPTV networks, etc. Here, the same access network is used for various services, and each service has its own applications. Media streaming through the Internet is based on protocols and applications different from the protocols used for file transfers or IPTV network services. Each terminal device is in turn designed to interoperate with one or more of these access networks, services and/or applications and each access network may interoperate with one or more terminal devices. Thus, these terminal devices provide a way to their users to interact with other users, experience media or use services. Mobile terminals allow users to do so while moving, fixed terminals do so at a specific location. However, mobile terminals are often more limited in functionality due to their limited size and battery life-time. Fixed terminals are typically connected to a power grid capable of delivering a lot more power than batteries. This supports more advanced functionality such as larger displays, more features, high bandwidth data transmission, easy to use by multiple users, etc. A convenient feature would be the transfer of sessions between various terminals. This would allow users to switch between mobile and fixed terminals depending on their availability. For instance, a user may be part of a telephone call with a fixed device and have a need to leave the location. The user would currently have to terminate the session manually and call back using a mobile telephone, or ask the other party to do so. Similarly, a user may be showing a streaming video to his children on a television set and have a need to transfer the video stream to a mobile device which he can place in his car to entertain the children during the voyage. Current solutions like the classical IPTV networks do not support this. The user needs to have an IPTV infrastructure in his car and needs to request the video stream again, or use services such as pausing broadcasts temporarily (time-shift TV) to stop the stream to the television set and continue the set on his car equipment.

The above two examples show that a transfer of sessions is rather cumbersome and generally requires user interaction such as terminating a session on one piece of equipment and establishing a new session on another piece of equipment. In sessions where multiple users are involved, these changes are noticeable by all the users and may even require other users to switch equipment as well.

US 2006/0153198 A1 describes a system for session transfer between two devices. The devices are automatically recognized, for instance via a Bluetooth link or a device-network. The Bluetooth link or device-network further enable the devices to exchange information. The exchanged information can be used to transfer sessions from a first device to a second device. No central server is involved which performs the session transfer.

US 2006/0291412 A1, paragraphs [0053] and [0054], discloses an IP Multimedia Subsystem (IMS) network whereto a piece of User Equipment (UE) has an established session. The IMS network further contains a serving node for controlling at least one IMS session in an IMS network for a user and at least a first access network for providing access to the first UE. Upon detection of another UE, information can be retrieved from the second UE and be sent to the serving node. The serving node will determine whether the second UE should be associated with the user and the session of the first UE using policy logic. If the second UE is to be associated with the user and the session, the serving node obtains a network address for the second UE and establishes an alternative network via a second access network connection to the second UE. In US 2006/0291412 A1, the second UE device first joins the first one as a result of which a kind of conference session is established. A further drawback of the system disclosed in US 2006/0291412 A1 is policy logic is required to determine whether the second UE is associated to the first UE.

It is an objective of the present invention to provide a system which allows a simple transfer of session between terminal devices. It is another object of the present invention to provide such a system which operates transparently for the users.

### Summary of the Invention

According to the present invention, the drawbacks of the prior art solutions are overcome and the above mentioned objectives are realized by a system comprising a first terminal device, a second terminal device and a session control server, the first terminal device comprising means for establishing a first session over a first access network, and the session control server further comprising:
- an interface for receiving a request from the first terminal device or the second terminal device;
- means for establishing a second session with the second terminal device over the first access network or a second access network; and
- means for terminating the first session,
- the means for terminating the first session and/or the means for establishing the second session being coupled to the interface and responsive to the request,
- the first terminal device and/or the second terminal device being adapted to initiate a request upon touch between the first terminal device and the second terminal device.

Indeed, by initiating a request for a new session based upon information obtained by touch, the system according to the present invention can provide a simple way of moving sessions between various user terminals. Touching one terminal device with another terminal device, either physical contact between the two devices or bringing them in close proximity, is a simple action that can be performed by the general public without any problem. The action of touch can be as simple as making physical contact between the two client terminals for a moment, or can be more complex and involve a longer duration of the touch, touching the terminals several times to trigger the transfer, or even touching the terminals in various positions such as horizontally and then vertically to initiate the session transfer. In addition, the action of touch may require a preparation phase before either or both of the terminal devices will become susceptible to session transfer. The preparation phase may consist of a key-press on a terminal device, rotation of a terminal device, etc.

In the light of the present invention, a session is considered as a data channel or communication channel between two terminal devices or a server and a terminal device. If a terminal device is replaced by another terminal device, the session is ended and a new session is established. For instance, a data connection between two laptop computers is a session, if a user replaces his laptop computer with a desktop computer which can be of that user or a different user, a new session is established between a laptop and a desktop computer. Another example is where a user who has established a streaming video session between his laptop computer and a video stream server of an Internet Protocol Television (IPTV) network operator replaces the laptop computer for a television set. The session between video stream server and laptop computer is terminated and a new session is established between the video stream server and the television set. In the description of the present invention, terms such as transferring a session or moving a session may be used. These terms indicate that at least one end-point such as a server or terminal device in an active session is replaced with another end-point or terminal device. This may mean that the path through one or more access networks between two end-points remains unchanged, except for the end-points or terminal devices themselves or that there is a completely new path through the same, or one or more additional or different access networks.

The session control server can receive the requests, either from the first terminal device which currently is part of the session or the second terminal device whereto the session will be transferred. Upon receipt of the request, the session control server determines the involved terminal devices, access networks, applications and/or services and provides instructions accordingly. Consider the following situation: two users with each a client terminal have a voice connection through an IP Multimedia Subsystem (IMS) network and they want to convert their session into an Instant Messaging session on their respective laptops connected to the same IMS network. By touching their respective laptop with their mobile phone, they initiate a request to the session control server which may be located in the same IMS network. The session control server determines that the service changes from voice to instant messaging and that the access networks change from a mobile connection to a fixed connection. The session control server can then update triggers in the IMS network which cause data from the first user to the second to be delivered to his laptop computer, rather than to his mobile phone. This can be done by the session control server by instructing intermediary nodes in the IMS network with the new destination for the data in the session with additional information related thereto such as changes in Quality of Service (QoS).

The above example shows that most of the session transfer intelligence according to the present invention is based in the network, which makes transfers appear transparent to the users. To the users, it seems that a touch automatically moves the session. The transparency is further obvious when application and/or service changes are involved in the session transfer. For instance, if two users have a telephone session established with their mobile phones and touch their laptop computers for a video conference, the session control server may instruct the laptop computers to run a video conference application and turn on a webcam. The session control server may further update the intermediary nodes and/or access networks to support the new applications. Another example is where a user has a video stream on his desktop computer and touches his television set to continue the video stream thereon. The service then changes from a datatransfer from a server to a desktop computer to for instance an IPTV service.

Optionally, the system according to the present invention may be characterized in that the first terminal device comprises means for initiating a request based on information retrieved from a second terminal device.

The first terminal device holds a session and may initiate a request to move that session to the second terminal device. In order to do so, the first terminal device can retrieve information from the second terminal device, for instance a unique identification number, and use that in the request. The request may then be used by the session control server to move the session from the first terminal device to a second terminal device indicated by the information retrieved from that second terminal device. This way, a user knows that the session will be transferred to the terminal device he touches.

Optionally, the system according to the present invention may be characterized in that the second terminal device comprises means for initiating a request based on information retrieved from the first terminal device.

The request may be initiated by the second terminal device which currently does or does not have other sessions established. In this case, the second terminal device retrieves information from the first terminal device. The information may then be used in a request to the session control server wherein the second terminal device asks to be the new end-point for the session currently established by the first terminal device.

The above described optional features may also be combined. Both the first terminal device and the second terminal device may be able to retrieve information from each other by touch and initiate a request to the session control server. In such case, there can either be a redundancy of the request to increase the reliability or such a system can be used to verify a transfer of session between two devices. Such a situation may avoid the transfer of a session between two terminals in an unwanted case, for instance a user moves too close to another terminal which is interpreted by that terminal as a request to transfer the session. In such case, if one device can retrieve information from the other, but not the other way round, a session may be kept as is. Optionally, in the system according to the present invention a touch is based on at least one token and at least one token reader in the first terminal device and/or the second terminal device.

Information tokens exist in various forms, they can be physical contact based, they can be based on optical recognition or they can be based on a wireless technology. Generally, information tokens can contain at least one piece of information such as an identifier found in bar codes or basic Radio Frequency Identification (RFID) tags. Alternatively, a token can be more complex, for instance a microprocessor coupled to a transmitter or receiver. The more information that can be stored in a token, the more complex applications become possible. A token may even be connected to other elements of a device such as a terminal device and be able to transmit live information such as information related to an established session. A reader related to each token or a specific type of tokens can be used to retrieve the stored information from the tokens. This allows a user to present information contained in a token in one device to a reader in a different device.

The location of the tokens and/or token readers is not important for the operation of the present invention. However, it may be feasible to locate tokens on or in a logical place, for instance on or near the device to which a session should be transferred. For an IPTV set, this may be on the television set, the set-top box, a wall near either of those, a remote control, etc, This way, a user can easily recognize a token or token reader and the related device and as such, the user can determine which token to touch in order to transfer a session to a particular device.

Optionally, the system according to the present invention may be adapted such that the at least one token is a Radio Frequency Identification (RFID) token and the at least one token reader is a Radio Frequency Identification (RFID) reader.

Each type of tokens and their respective readers are subject to some advantages and disadvantages. For instance, a physical electric contact between two terminal devices is subject to damage and requires that a user places the two terminal devices in contact in the correct way. In addition, such contacts require physical contact between these two terminal devices. However, an electrical contact is relatively easy to make and requires no additional hardware, they can be coupled directly to the hardware and software in the terminal device which processes information or provides information. Optical methods such as bar codes also require that a user positions the tokens in a particular way towards the token reader to obtain a good reading. In addition, bar codes are rather limited and static in the information they can hold. Also, the bar code has to be placed in an accessible place on the terminal devices which may not always be possible if a producer wants to obtain a particular aesthetic look for the terminal device.

Therefore, a wireless technology offers the most advantages for providing and retrieving information between two terminal devices. These wireless technologies can be accessed without a physical touch between the two devices, which reduces the risk of damaging either device and avoids the need of placing contact points on the front of the device or in another easily accessible place which can be seen by the users. One possible technology is infrared technology, however this requires a line-of-sight to operate correctly, which means that a user has to aim carefully. Another possibility is Bluetooth technology, which offers some advantages. It does not require line-of-sight it can operate without physical contact and the pairing of devices can be used as a security measure to avoid unwanted use of a particular terminal device or to avoid accidental transfer of a session by moving too close to a terminal device. However, Bluetooth technology requires hardware modifications which come at a price and cannot be easily added to existing devices.

Yet another possible wireless technology is RFID which is based on tags which can be read by readers. Such tags can contain a unique identifier which can be placed on an existing device or built into new devices. These tags can be configured to cover a particular area wherein they are responsive to the signals of a reader and the reader can be configured to cover a particular area wherein tags can be read. As such, RFID tags can enable a terminal device to retrieve information by touch, either a physical touch or by being close to each other.

Optionally, the system according to the present invention may be adapted such that said at least one token is a Near Field Communication (NFC) target and the at least one token reader is a Near Field Communication (NFC) initiator.

Near Field Communication (NFC) technology is similar to RFID technology in that it provides a way of retrieving information from particular targets from within the vicinity of that target. Therefore it may be used as an alternative to RFID which offers the same advantages as RFID, as described above.

Optionally, in the system according to the present invention, the information may comprise one or more of the following:
- an identifier of the first terminal device;
- an identifier of the second terminal device;
- an identifier of a service related to the session; and
- an identifier of an access network provisioning the service.

The information that is retrieved from one terminal device by the other terminal device can be used as basis for the initiated request. The information has to enable either of the terminal devices or the session control server to determine the appropriate actions. As such, the information preferably at least indicates the identity of a terminal device, being the terminal device which does not send the request. This way, the terminal device initiating the request knows about his own identity and that of the other terminal device. This may enable the session control server to transfer the session from one terminal device to another terminal device. If only an identity of a terminal device is retrieved, the session control server or another node in a network can determine the related access networks and/or services and provide such information to the session control server and/or terminal devices. Alternatively, the information also provides information about the session such as the access network currently involved in the session or the service currently being used.

If a session control server is aware of the two terminal devices, the service and the access networks involved, it can instruct nodes in the networks with changes that are required to transfer the session from one terminal device to another.

The present invention further relates to a session control server for use in a system according to the present invention.

A session control server located in the network of an operator allows for a transparent operation of the session transfer. A user only experiences the touch of a terminal device and then notices the transfer of the session. No additional actions or hardware are required as the session control server handles everything once a request has been received. Of course, a confirmation may be required by the user to avoid unwanted session transfers, however this is optional.

The present invention further also relates to a terminal device for use in a system according to the present invention.

The terminal devices can be any device which is able to communicate over a particular medium. For instance, a mobile telephone, a television set connected to a set-top box, a laptop computer, a desktop computer, a multimedia installation in a vehicle, etc. The terminal devices may also be client devices connected to an IMS network, devices capable of maintaining a General Packet Radio Service connection, a device connected to a Local Area Network or a Wide Area Network, etc.

Generally speaking, each device which can communicate and which can send and/or receive information by touch may be used as a terminal device.

The drawbacks of the prior art solutions are also overcome and the objectives of the present invention are also achieved by a method for use in a system comprising a first terminal device, a second terminal device and a session control server, said method comprising establishing a first session over a first access network by said first terminal device,
characterized in that said method further comprises:
- touching said first terminal device with said second terminal device or vice versa;
- receiving a request from said first terminal device or said second terminal device by said session control server;
- establishing upon request a second session with said second terminal device over said first access network or a second access network by said session control server; and
- terminating said first session by said session control server.

### Brief Description of the Drawings

Fig. 1a to 1c illustrate a system according to an embodiment of the present invention at various stages during a session transfer;
Fig. 2 illustrates a logical overview of an embodiment of the session control server according to the present invention and related network nodes; and
Fig. 3a and 3b illustrate a system according to an alternative embodiment of the present invention at various stages during a session transfer.

### Detailed Description of Embodiment(s)

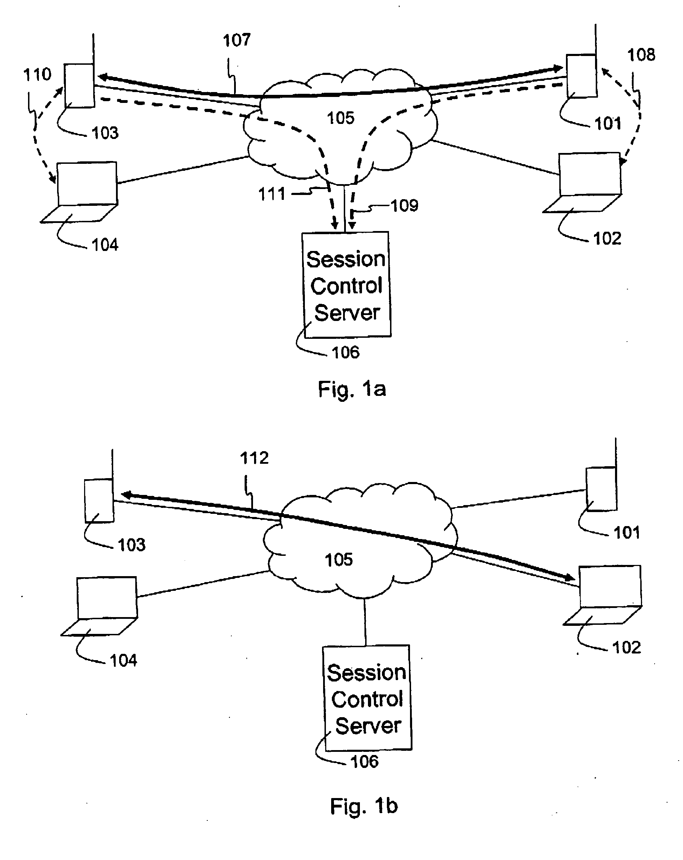

Fig. 1a shows a system with terminal devices 101 and 102 belonging to a first user and terminal devices 103 and 104 belonging to a second user. These terminal devices are connected to each other through an access network 105, to which also a session control server 106 is connected. Fig. 1a further shows an established session 107 between terminal devices 101 and 103. These terminal devices 101 and 103 are mobile telephones or Personal Digital Assistants (PDA) with mobile telephone abilities for this particular example. The session 107 is an active telephone call between the two users and runs over the mobile telephone part of access network 105. If the first user decides to continue his telephone call from his laptop, for instance to make it a video call, he touches terminal device 102 with his terminal device 101 as is indicated by arrow 108. Arrow 108 further indicates the transfer of information between terminal device 101 and 102, in this particular embodiment arrow 108 indicates that terminal device 101 retrieves the identification of terminal device 102. Terminal device 101 can then use this information to initiate a request 109 and send this request to Session Control Server (SCS) 106. For this specific example, both users have agreed to continue over a video conference, and thus the second user touches terminal device 104 with his terminal device 103 as is indicated by arrow 110. Similar to arrow 108, this also indicates a transfer of information between terminal device 103 and terminal device 104. In this particular embodiment, arrow 110 indicates that terminal device 103 retrieves an identification from terminal device 104. Based on this information, terminal device 103 initiates request 111 which is also sent to the SCS 106. Although not shown here, it may be possible that a user has to confirm the session transfer either on the originating device (i.e. terminal device 101 for the first user and terminal device 103 for the second user) or the receiving device (i.e. terminal device 102 or terminal device 104).

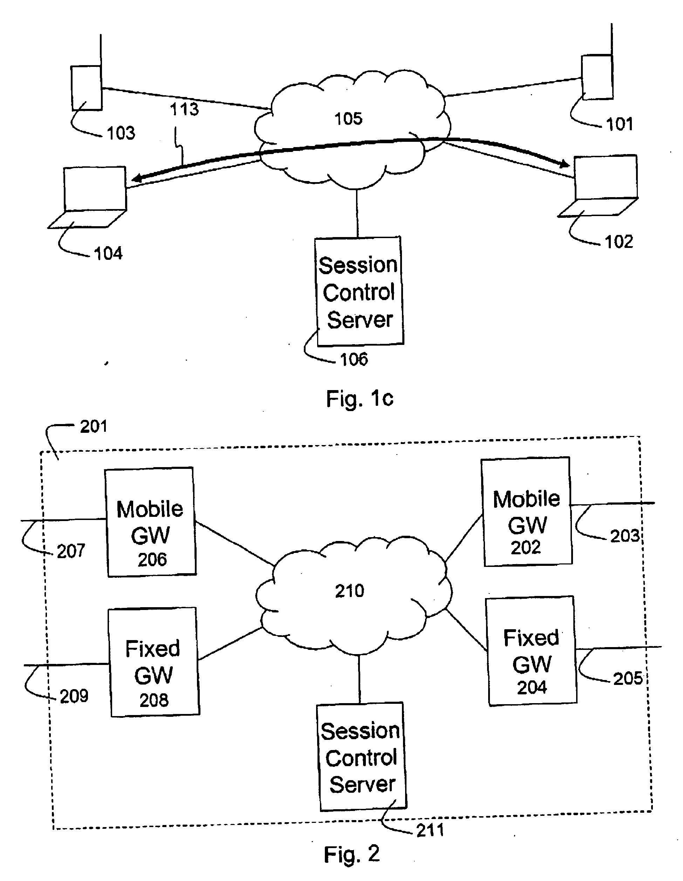

The SCS 106 will upon receipt of these requests determine how the session can be moved from terminal device 101 to 102 and from 103 to 104. Based on the new terminal device identification (for instance 102 and 104), the SCS 106 can instruct intermediate nodes in access network 105 to redirect traffic. The operation of SCS 106 in relation to such nodes is illustrated in more detail in Fig. 2 which will be described below.

Fig. 1b shows the next stage of the session transfer. This figure shows the same terminal devices 101, 102, 103 and 104 as Fig. 1a, but with the session transferred on a single end, the first user end. Thus, the session 112 now exists between terminal device 102 and 103. This is an intermediary situation which occurred because either the other user (of terminal device 103) has not requested a transfer or the request for the transfer from terminal device 103 to 104 was received later and still needs to be processed. The situation illustrated in Fig. 1b allows the first user to use all abilities of its terminal device 102, which in this particular example is a laptop computer. Through a webcam, the user can offer an audio and video stream to the other user. The laptop computer may automatically run application to support these abilities or be told by the session control server 106 which applications are required. In addition, the service changes from a mobile telephone service to for instance a broadband network service. Meanwhile, the user of terminal device 103 is restricted to the features of his mobile phone, e.g. only audio. Finally, Fig. 1c shows the next stage, wherein both users have successfully switched to their laptop computers, terminal devices 102 and 104. The session 113 indicates that communication occurs between these terminal devices. Now, each user is able to have a video conference, rather than just an audio based communication.

It should be noted that the intermediary situation of Fig. 1b may not always occur. For instance, the user of terminal device 103 may be first in touching terminal device 104, in which case his transfer may occur before the transfer from terminal device 101 to 102. Alternatively, the SCS 106 may await both users to request their change before making the actual change. This can be done to ensure that each user is able to fully experience the session and all the possible features thereof. This could avoid transmitting video data to a mobile telephone which is not able to receive and/or display the video data.

The SCS 106 is shown here as a single device. However, it can be possible to have one or more SCS, either in one network or multiple networks. Each operator of an access network may have his own SCS to control changes that affect his network or that require changes in his network. The SCS may also be located in a company network, for instance to provide an easy system of moving sessions between various terminals within the company, for instance from your desk telephone to a mobile telephone or to a telephone in a conference room.

The terminal devices in this example are mobile telephones and laptop computers. However, these can be any terminal that can interact with an access network of any kind and that is able to communicate with a SCS. As such, the terminals can be desktop computers, hand-held devices such as PDA or tablet PC, computers integrated in vehicles, appliances in the house or even building automation installations, provided these terminals are equipped with the functionality to initiate a request for session transfer after touching another terminal.

Fig. 2 illustrates a close-up view of the access network 105 in Fig. 1a to 1c. Fig. 2 shows the network 201 which consists of a first mobile gateway 202, which has an interface 203 to a mobile device of the first user, such as terminal device 101 in Fig. 1 a to 1c. There is also a fixed gateway 204 which has an interface 205 to a fixed device of the first user, such as terminal device 102 in Fig. 1a to 1c. Similarly, there are also mobile gateway 206 and fixed gateway 208 with respectively interface 207 to a mobile device of the second user and interface 209 to a fixed device of the second user. All of these gateways 202, 204, 206, 208 are connected to a session control server (SCS) 211 through network 210. In this particular example, network 210 also provides the interconnection between all the gateways. However, this is not required as these gateways may be interconnected through other networks which are not shown.

The SCS 211 receives requests through a particular gateway from a terminal device. In this example, we consider a situation where the SCS 211 receives a request from a terminal device connected to interface 207. The request is for transferring the session from that device to a device connected to interface 209. Upon receipt of this request, the SVS 211 instructs nodes in network 210 to send all information currently destined for mobile gateway 206 for delivery over interface 207 to the fixed gateway 208. This establishes a new session between the device connected to interface 209 and the device of the other user. The SCS 211 can also instruct mobile gateway 206 to terminate his current session with the device connected thereto.

This example shows only a single SCS 211, however, there may be two separate networks for mobile and fixed, and each network may have an SCS. In such case, it may be possible for these SCS's to interoperate and make changes in their respective networks. Alternatively, on one or both sides, each device is connected to the same gateway. In such case, the SCS instructs that gateway to transport the session over a different interface than the current session.

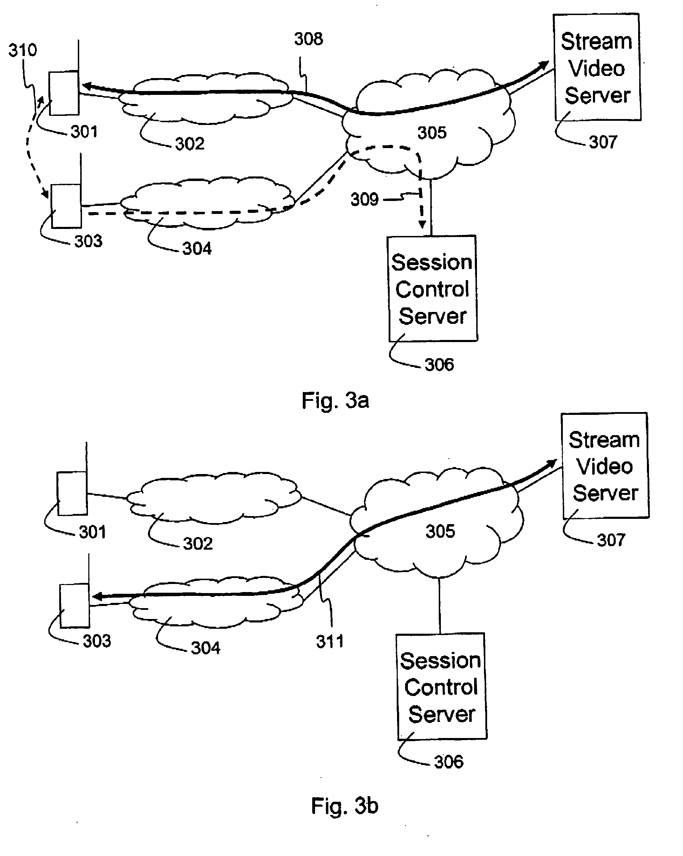

Fig. 3a illustrates a situation wherein a first user has a terminal device 301 which is connected to an IPTV network 305 through access network 302. The IPTV network 305 contains a streaming video server 307 and a session control server 306. The first user currently has a session 308 established between his terminal device 301, e.g. a UMTS handy and the streaming video server 307. If the first user decides to hand his session 308 over to the terminal device 303 of a second user e.g. a second UMTS handy registered with an UMTS operator different from the first user's UMTS operator, the first user can touch the terminal device 303 of the second user as is indicated by arrow 310. Arrow 310 further indicates the transfer of information between the terminal devices 301 and 303. In this particular example, the terminal device 303 retrieves an identification of terminal device 301 and an identification of video stream session 308 from the terminal device 301. Once the terminal device 303 of the second user has all the relevant information, it initiates a session transfer request 309 to the session control server 306. The session control server 306 will in turn instruct nodes in the IPTV network 305 to transfer the session from terminal device 301 to terminal device 303. In this particular embodiment, the session control server will instruct the streaming video server that the new destination of the video stream session 308 is terminal device 303.

Fig. 3b illustrates the situation of Fig. 3a wherein the video stream session 308 has been terminated and wherein a new video stream session 311 has been established. The new video stream session 311 is established between the streaming video server 307 and the terminal device 303 and the video stream session 311 runs through the IPTV network 305 and an access network 304 which is different from the access network 302.

Although the present invention has been illustrated by reference to specific embodiments, it will be apparent to those skilled in the art that the invention is not limited to the details of the foregoing illustrative embodiments. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned.

## Claims

1. A system comprising a first terminal device (101, 103; 301), a second terminal device (102, 104; 303) and a session control server (106; 211; 306), said first terminal device (101, 103; 301) comprising means for establishing a first session (107; 308) over a first access network (105; 302),
whereby said session control server (106; 211; 306) further comprises:
- an interface for receiving a request (109, 111; 309) from said first terminal device (101, 103; 301) or said second terminal device (102, 104; 303);
- means for establishing a second session (112, 113; 311) with said second terminal device (102, 104; 303) over said first access network (105; 302) or a second access network (304); and
- means for terminating said first session (107; 308),
- said means for terminating said first session (107: 308) and/or said means for establishing said second session (112, 113; 311) being coupled to said interface and responsive to said request (109, 111; 309),
and whereby:
- said first terminal device (101, 103; 301) and/or said second terminal device (102, 104; 303) are adapted to initiate said request (109, 111; 311) upon physical contact between said first terminal device and said second terminal device.

2. The system according to claim 1, **characterized in that** said first terminal device (101, 103; 301) comprises means for initiating said request (109, 111; 309) based on information retrieved from said second terminal device (102, 104; 303).

3. The system according to claim 1, **characterized in that** said second terminal device (102, 104; 303) comprises means for initiating said request (109, 111; 309) based on information retrieved from said first terminal device (101, 103; 301).

4. The system according to claim 1, **characterized in that** said touch (108, 110; 310) is based on at least one token and at least one token reader in said first terminal device (101, 103; 301) and/or said second terminal device (102, 104; 303).

5. The system according to claim 4, **characterized in that** said at least one token is a Radio Frequency identification (RFID) token and said at least one token reader is a Radio Frequency identification (RFID) reader.

6. The system according to claim 4, **characterized in that** said at least one token is a Near Field Communication (NFC) target and said at least one token reader is a Near Field Communication (NFC) initiator.

7. The system according to claim 2 or 3, **characterized in that** said information comprises one or more of the following:
- an identifier of said first terminal device (101, 103; 301);
- an identifier of said second terminal device (102, 104; 303);
- an identifier of a service related to said session (107, 112, 113; 308, 311); and
- an identifier of an access network (105; 302, 304) provisioning said service.

8. A session control server (106; 211; 306) for use in a system as defined in claim 1, said session control server comprising :
- an interface for receiving a request (109, 111; 309) from a first terminal device (101, 103; 301) performing a first session (107, 308) over a first access network (105,302) or from a second terminal device (102, 104; 303);
- means for establishing a second session (112, 113; 311) with said second terminal device (102, 104; 303) over said first access network (105; 302) or a second access network (304); and
- means for terminating said first session (107; 308),
said means for terminating said first session (107: 308) and/or said means for establishing said second session (112, 113; 311) being coupled to said interface and responsive to said request (109, 111; 309).

9. A terminal device (101, 102, 103, 104; 301, 303) for use in a system as defined in claim 1, said terminal device comprising means for establishing a first session (107; 308) over a first access network (105; 302) and adapted to initiate upon physical contact with a further terminal device a request (109, 111; 311) to a session control server, so that said session control server, in response to said request, terminates said first session and establishes a second session with said further terminal device over said first access network or over a second access network.

10. A method for use in a system comprising a first terminal device (101, 103; 301), a second terminal device (102, 104; 303) and a session control server (106; 211; 306), said method comprising establishing a first session (107, 308) over a first access network (105; 302) by said first terminal device (101, 103; 301),
whereby said method further comprises:
- touching (108, 110; 310) said first terminal device (101, 103; 301) with said second terminal device (102, 104; 303) or vice versa;
- receiving a request (109, 111; 309) from said first terminal device (101, 103; 301) or said second terminal device (102, 104; 303) by said session control server (106; 211; 306);
- establishing upon request a second session (112, 113; 311) with said second terminal device (102, 104; 303) over said first access network (105; 302) or a second access network (304) by said session control server (106; 211; 306); and
- terminating said first session (107, 308) by said session control server (106; 211; 306).

## Patentansprüche

1. System, umfassend ein erstes Endgerät (101, 103; 301), ein zweites Endgerät (102, 104; 303) und einen Sitzungssteuerungsserver (106; 211; 306), wobei das besagte erste Endgerät (101, 103; 301) Mittel zum Aufbauen einer ersten Sitzung (107; 308) über ein erstes Zugangsnetzwerk (105; 302) umfasst,
wobei der besagte Sitzungssteuerungsserver (106; 211; 306) weiterhin umfasst:
- Eine Schnittstelle zum Empfangen einer Anforderung (109, 111; 309) von dem besagten ersten Endgerät (101, 103; 301) oder dem besagten zweiten Endgerät (102, 104; 303);
- Mittel zum Aufbauen einer zweiten Sitzung (112, 113; 311) mit dem besagten zweiten Endgerät (102, 104; 303) über das besagte erste Zugangsnetzwerk (105; 302) oder ein zweites Zugangsnetzwerk (304); und
- Mittel zum Beenden der besagten ersten Sitzung (107; 308),
- wobei die besagten Mittel zum Beenden der besagten ersten Sitzung (107; 308) und/oder die besagten Mittel zum Aufbauen der besagten zweiten Sitzung (112, 113; 311) an die besagte Schnittstelle gekoppelt sind und auf die besagte Anforderung (109, 111; 309) reagieren,
und wobei
- das besagte erste Endgerät (101, 103; 301) und/oder das besagte zweite Endgerät (102, 104; 303) dazu ausgelegt sind, die besagte Anforderung (109, 111; 311) bei einem physischen Kontakt zwischen dem besagten ersten Endgerät und dem besagten zweiten Endgerät zu initiieren.

2. System nach Anspruch 1, **dadurch gekennzeichnet, dass** das besagte erste Endgerät (101, 103; 301) Mittel zum Initiieren der besagten Anforderung (109, 111; 309) auf Basis der von dem besagten zweiten Endgerät (102, 104; 303) abgerufenen Informationen umfasst.

3. System nach Anspruch 1, **dadurch gekennzeichnet, dass** das besagte zweite Endgerät (102, 104; 303) Mittel zum Initiieren der besagten Anforderung (109, 111; 309) auf Basis der von dem besagten ersten Endgerät (101, 103; 301) abgerufenen Informationen umfasst.

4. System nach Anspruch 1, **dadurch gekennzeichnet, dass** die besagte Berührung (108, 110; 310) auf mindestens einem Token und mindestens einem Token-Leser in dem besagten ersten Endgerät (101, 103; 301) und/oder dem besagten zweiten Endgerät (102, 104; 303) basiert.

5. System nach Anspruch 4, **dadurch gekennzeichnet, dass** das besagte mindestens eine Token ein Funkfrequenzidentifikations- bzw. RFID-Token und der besagte mindestens eine Token-Leser ein Funkfrequenzidentifikations- bzw. RFID-Leser ist.

6. System nach Anspruch 4, **dadurch gekennzeichnet, dass** das besagte mindestens eine Token ein Nahfeldkommunikations- bzw. NFC-Target und der besagte mindestens eine Token-Leser ein Nahfeldkommunikations- bzw. NFC-Initiator ist.

7. System nach Anspruch 2 oder 3, **dadurch gekennzeichnet, dass** die besagten Informationen eine oder mehrere der folgenden Informationen enthalten:
- Eine Kennung des besagten ersten Endgerät (101, 103; 301);
- eine Kennung des besagten zweiten Endgeräts (102, 104; 303);
- eine Kennung eines mit der besagten Sitzung (107, 112, 113; 308, 311) assoziierten Dienstes; und
- eine Kennung eines Zugangsnetzwerks (105; 302, 304), welches den besagten Dienst bereitstellt.

8. Sitzungssteuerungsserver (106; 211; 306) zur Verwendung in einem System gemäß Anspruch 1, wobei der besagte Sitzungssteuerungsserver umfasst :
- Eine Schnittstelle zum Empfangen einer Anforderung (109, 111; 309) von einem ersten Endgerät (101, 103; 301), welches eine erste Sitzung (107, 308) über ein erstes Zugangsnetzwerk (105, 302) durchführt, oder von einem zweiten Endgerät (102, 104; 303);
- Mittel zum Aufbauen einer zweiten Sitzung (112, 113; 311) mit dem besagten zweiten Endgerät (102, 104; 303) über das besagte erste Zugangsnetzwerk (105; 302) oder ein zweites Zugangsnetzwerk (304); und
- Mittel zum Beenden der besagten ersten Sitzung (107; 308),
wobei die besagten Mittel zum Beenden der besagten ersten Sitzung (107; 308) und/oder die besagten Mittel zum Aufbauen der besagten zweiten Sitzung (112, 113; 311) an die besagte Schnittstelle gekoppelt sind und auf die besagte Anforderung (109, 111; 309) reagieren.

9. Endgerät (101, 102, 103, 104; 301, 303) zur Verwendung in einem System gemäß Anspruch 1, wobei das besagte Endgerät Mittel zum Aufbauen einer ersten Sitzung (107; 308) über ein erstes Zugangsnetzwerk (105; 302) umfasst, um bei einem physischen Kontakt mit einem weiteren Endgerät eine Anforderung (109, 111; 311) an einen Sitzungssteuerungsserver zu initiieren, so dass der besagte Sitzungssteuerungsserver in Reaktion auf die besagte Anforderung die besagte erste Sitzung beendet und eine zweite Sitzung mit dem besagten weiteren Endgerät über das besagte erste Zugangsnetzwerk oder über ein zweites Zugangsnetzwerk aufbaut.

10. Verfahren zur Verwendung in einem System, welches ein erstes Endgerät (101, 103; 301), ein zweites Endgerät (102, 104; 303) und einen Sitzungssteuerungsserver (106; 211; 306) umfasst, wobei das besagte Verfahren das Aufbauen einer ersten Sitzung (107, 308) über ein erstes Zugangsnetzwerk (105; 302) durch das besagte erste Endgerät (101, 103; 301) umfasst,
wobei das besagte Verfahren weiterhin umfasst:
- Berühren (108, 110; 310) des besagten ersten Endgeräts (101, 103; 301) mit dem besagten zweiten Endgerät (102, 104; 303) oder umgekehrt;
- Empfangen einer Anforderung (109, 111; 309) von dem besagten ersten Endgerät (101, 103; 301) oder dem besagten zweiten Endgerät (102, 104; 303) an dem besagten Sitzungssteuerungsserver (106; 211; 306);
- auf Anforderung, Aufbauen einer zweiten Sitzung (112, 113; 311) mit dem besagten zweiten Endgerät (102, 104; 303) über das besagte erste Zugangsnetzwerk (105; 302) oder ein zweites Zugangsnetzwerk (304) durch den besagten Sitzungssteuerungsserver (106; 211; 306); und
- Beenden der besagten ersten Sitzung (107, 308) durch den besagten Sitzungssteuerungsserver (106; 211; 306).

## Revendications

1. Système comprenant un premier dispositif de terminal (101, 103 ; 301), un deuxième dispositif de terminal (102, 104 ; 303) et un serveur de commande de session (106 ; 211 ; 306), ledit premier dispositif de terminal (101, 103 ; 301) comprenant des moyens pour établir une première session (107 ; 308) sur un premier réseau d'accès (105 ; 302),
ledit serveur de commande de session (106 ; 211 ; 306) comprenant en outre :
- une interface pour recevoir une demande (109, 111 ; 309) à partir dudit premier dispositif de terminal (101, 103 ; 301) ou dudit deuxième dispositif de terminal (102, 104 ; 303) ;
- des moyens pour établir une deuxième session (112, 113 ; 311) avec ledit deuxième dispositif de terminal (102, 104 ; 303) sur ledit premier réseau d'accès (105 ; 302) ou un deuxième réseau d'accès (304) ; et
- des moyens pour interrompre ladite première session (107 ; 308),
- lesdits moyens pour interrompre ladite première session (107 ; 308) et/ou lesdits moyens pour établir ladite deuxième session (112, 113 ; 311) étant couplés à ladite interface et répondant à ladite demande (109, 111 ; 309),
et par lequel
- ledit premier dispositif de terminal (101, 103 ; 301) et/ou ledit deuxième dispositif de terminal (102, 104 ; 303) sont adaptés pour initier ladite demande (109, 111 ; 311) lors d'un contact physique entre ledit premier dispositif de terminal et ledit deuxième dispositif de terminal.

2. Système selon la revendication 1, **caractérisé en ce que** ledit premier dispositif de terminal (101, 103 ; 301) comprend des moyens pour initier ladite demande (109, 111 ; 309) sur la base d'informations récupérées à partir dudit deuxième dispositif de terminal (102, 104 ; 303).

3. Système selon la revendication 1, **caractérisé en ce que** ledit deuxième dispositif de terminal (102, 104 ; 303) comprend des moyens pour initier ladite demande (109, 111 ; 309) sur la base d'informations récupérées à partir dudit premier dispositif de terminal (101, 103 ; 301).

4. Système selon la revendication 1, **caractérisé en ce que** ladite mise en contact (108, 110 ; 310) est basée sur au moins un jeton et au moins un lecteur de jetons dans ledit premier dispositif de terminal (101, 103 ; 301) et/ou ledit deuxième dispositif de terminal (102, 104 ; 303).

5. Système selon la revendication 4, **caractérisé en ce que** ledit au moins un jeton est un jeton d'identification par radiofréquence (RFID) et ledit au moins un lecteur de jetons est un lecteur d'identification par radiofréquence (RFID).

6. Système selon la revendication 4, **caractérisé en ce que** ledit au moins un jeton est une cible de communication en champ proche (NFC) et ledit au moins un lecteur de jetons est un initiateur de communication en champ proche (NFC).

7. Système selon la revendication 2 ou 3, **caractérisé en ce que** lesdites informations comprennent un ou plusieurs identifiants parmi :
- un identifiant dudit premier dispositif de terminal (101, 103 ; 301) ;
- un identifiant dudit deuxième dispositif de terminal (102, 104 ; 303) ;
- un identifiant d'un service associé à ladite session (107, 112, 113 ; 308, 311) ; et
- un identifiant d'un réseau d'accès (105 ; 302, 304) fournissant ledit service.

8. Serveur de commande de session (106 ; 211 ; 306) destiné à être utilisé dans un système selon la revendication 1, ledit serveur de commande de session comprenant :
- une interface pour recevoir une demande (109, 111 ; 309) à partir d'un premier dispositif de terminal (101, 103 ; 301) exécutant une première session (107, 308) sur un premier réseau d'accès (105, 302) ou à partir d'un deuxième dispositif de terminal (102, 104 ; 303) ;
- des moyens pour établir une deuxième session (112, 113 ; 311) avec ledit deuxième dispositif de terminal (102, 104 ; 303) sur ledit premier réseau d'accès (105 ; 302) ou un deuxième réseau d'accès (304) ; et
- des moyens pour interrompre ladite première session (107 ; 308),
lesdits moyens pour interrompre ladite première session (107 ; 308) et/ou lesdits moyens pour établir ladite deuxième session (112, 113 ; 311) étant couplés à ladite interface et répondant à ladite demande (109, 111 ; 309).

9. Dispositif de terminal (101, 102, 103, 104 ; 301, 303) destiné à être utilisé dans un système selon la revendication 1, ledit dispositif de terminal comprenant des moyens pour établir une première session (107 ; 308) sur un premier réseau d'accès (105 ; 302) et adapté pour initier, lors d'un contact physique avec un autre dispositif de terminal, une demande (109, 111 ; 311) à un serveur de commande de session, de sorte que ledit serveur de commande de session, en réponse à ladite demande, interrompe ladite première session et établisse une deuxième session avec ledit autre dispositif de terminal sur ledit premier réseau d'accès ou sur un deuxième réseau d'accès.

10. Procédé destiné à être utilisé dans un système comprenant un premier dispositif de terminal (101, 103 ; 301), un deuxième dispositif de terminal (102, 104 ; 303) et un serveur de commande de session (106 ; 211 ; 306), ledit procédé comprenant l'établissement d'une première session (107 ; 308) sur un premier réseau d'accès (105 ; 302) au moyen dudit premier dispositif de terminal (101, 103 ; 301),
ledit procédé comprenant en outre les étapes suivantes :
- mettre en contact (108, 110 ; 310) ledit premier dispositif de terminal (101, 103 ; 301) avec ledit deuxième dispositif de terminal (102, 104 ; 303) ou inversement ;
- recevoir une demande (109, 111 ; 309) à partir dudit premier dispositif de terminal (101, 103 ; 301) ou dudit deuxième dispositif de terminal (102, 104 ; 303) au moyen dudit serveur de commande de session (106 ; 211 ; 306) ;
- établir, lors d'une demande, une deuxième session (112, 113 ; 311) avec ledit deuxième dispositif de terminal (102, 104 ; 303) sur ledit premier réseau d'accès (105; 302) ou un deuxième réseau d'accès (304) au moyen dudit serveur de commande de session (106 ; 211 ; 306) ; et
- interrompre ladite première session (107, 308) au moyen dudit serveur de commande de session (106 ; 211 ; 306).
